# EUROPÄISCHE PATENTSCHRIFT

(11) **EP 2 439 089 B1**
(45) Veröffentlichungstag und Bekanntmachung des Hinweises auf die Patenterteilung: **15.05.2013**
(21) Anmeldenummer: 10290543.7
(22) Anmeldetag: 11.10.2010
(51) Int. Cl.: B60H 1/00

(54) **Kraftfahrzeugklimaanlage**
Motor vehicle air conditioning
Climatisation de véhicule automobile

(43) Veröffentlichungstag der Anmeldung: 11.04.2012
(73) Patentinhaber: Behr France Rouffach SAS, 68250 Rouffach (FR)
(72) Erfinder: Mougey, Mathieu, 68170 Rixheim (FR); Luttringer, Christophe, 68700 Steinbach (FR); Wacinowski, Eric, 68200 Mulhouse (FR)
(74) Vertreter: Grauel, Andreas

(56) Entgegenhaltungen:
- EP-A1- 1 800 917
- EP-A1- 2 138 334
- DE-A1-102006 000 804
- DE-A1-102007 044 977

## Beschreibung

Die Erfindung betrifft eine Kraftfahrzeugklimaanlage gemäß dem Oberbegriff des Anspruches 1.

Kraftfahrzeugklimaanlagen werden in Kraftfahrzeugen eingesetzt, um die einem Innenraum des Kraftfahrzeuges zuzuführende Luft zu kühlen und/oder zu erwärmen. Die Kraftfahrzeugklimaanlage weist dabei ein Gehäuse, im Allgemeinen aus Kunststoff hergestellt, auf und innerhalb des Gehäuses ist eine Gebläseeinheit mit einem Elektromotor und einem Lüfterrad angeordnet. Ferner sind innerhalb des Gehäuses ein Kältemittelverdampfer zum Kühlen der Luft und eine Heizeinrichtung zum Erwärmen der Luft angeordnet. Dabei weist das Gehäuse der Kraftfahrzeugklimaanlage eine Lufteintrittsöffnung zum Ansaugen der Luft und eine Luftaustrittsöffnung zum Ausleiten der Luft aus dem Gehäuse der Kraftfahrzeugklimaanlage auf. Die Luft wird an der Lufteintrittsöffnung aus der Umgebung und/oder dem Innenraum des Kraftfahrzeuges angesaugt und nach dem Ausleiten aus der Luftaustrittsöffnung mittels Luftdüsen dem Innenraum des Kraftfahrzeuges zugeführt.

Die Gebläseeinheit mit dem Elektromotor und dem Lüfterrad ist dabei an dem Gehäuse der Kraftfahrzeugklimaanlage befestigt. Bei der Herstellung der Kraftfahrzeugklimaanlage ist eine Montage bzw. Befestigung der Gebläseeinheit an dem Gehäuse der Kraftfahrzeugklimaanlage erforderlich und im Service- oder Schadensfall, zum Beispiel bei einem beschädigten Elektromotor, ist eine Demontage der Gebläseeinheit aus dem von dem Gehäuse eingeschlossenen Innenraum erforderlich. Hierzu ist die Gebläseeinheit mittels einer lösbaren Verbindungseinrichtung mit dem Gehäuse verbunden.

Die Kraftfahrzeugklimaanlage ist innerhalb eines Kraftfahrzeuges unterhalb der Armaturentafel zwischen den Vordersitzen angeordnet. Hierbei steht für eine Montage und Demontage der Gebläseeinheit im Allgemeinen nur wenig Arbeifisraum zur Verfügung. Beispielsweise kann an einer linken Hälfte des Gehäuses der Kraftfahrzeugklimaanlage nur ein sehr eingeschränkter Arbeits- bzw. Bauraum zur Verfügung stehen, um die Gebläseeinheit im Servicefall aus dem Gehäuse zu demontieren.

Aus der EP 1 800 917 B1 ist eine Kraftfahrzeugklimaanlage mit einem Gehäuse und einer Gebläseeinheit bekannt. Die Gebläseeinheit ist dabei in einer Montagestellung entfernbar innerhalb des Gehäuses angeordnet und umfasst einen Elektromotor und zwei Turbinen. An dem Gehäuse der Kraftfahrzeugklimaanlage ist eine Zugangsöffnung ausgebildet, die seitlich in einem Endbereich des Gehäuses angeordnet ist. Die Zugangsöffnung ist dabei an einem Lufteintritt eines Turbinengehäuses geformt. Der Lufteintritt des Turbinengehäuses ist dabei mit einem Luftansaugkanal versehen, der für den Ein- und Ausbau der Gebläseeinheit ausbaubar hergestellt ist.

Die EP 0 595 336 B1 zeigt ein Luftführungsgehäuse für eine Klimaanlage in einem Kraftfahrzeug, mit Öffnungen zur Montage von Anschlussteilen, wie Luftzufuhrstutzen, Verschlussdeckel oder dergleichen, wobei eine Öffnung von einer Ringfläche umgeben ist, an der eine Ringfläche eines montierten Anschlussteils dichtend anliegt. Eine Luftspirale des im Luftführungsgehäuse angeordneten Luftgebläses weist auf der einem Luftzufuhrstutzen abgewandten Seite eine Öffnung auf, die der Montage des Luftgebläses dient. Ein Gebläserad wird axial durch die Öffnung in der Luftspirale angeordnet. Ein Verschlussdeckel, mit dem die Montageöffnung zu verschließen ist, weist eine becherförmige Steckaufnahme auf, die zur Öffnung hin offen ist. In die Steckaufnahme wird ein elektrischer Antriebsmotor eingesteckt und durch einen in einer Wand der Steckaufnahme vorgesehenen Steckerschacht mit einer elektrischen Versorgungsleitung verbunden.

Die Aufgabe der vorliegenden Erfindung besteht deshalb darin, eine Kraftfahrzeugklimaanlage zur Verfügung zu stellen, bei der die Gebläseeinheit auch bei wenig Arbeitsraum an dem Gehäuse einfach montier- und demontierbar ist.

Diese Aufgabe wird gelöst mit einer Kraftfahrzeugklimaanlage, umfassend ein Gehäuse, eine innerhalb des Gehäuses angeordnete Gebläseeinheit mit einem Elektromotor und einem Lüfterrad, eine Montageöffnung an dem Gehäuse zur Montage und Demontage der Gebläseeinheit, einen Montagedeckel zum Verschließen der Montageöffnung, vorzugsweise einen Kältemittelverdampfer zum Kühlen einer einem Fahrzeuginnenraum zuzuführenden Luft, vorzugsweise eine Heizeinrichtung zum Erwärmen der dem Fahrzeuginnenraum zuzuführenden Luft, wobei das Gehäuse mit einer Zusatzöffnung versehen ist und bei einer montierten Gebläseeinheit die Zusatzöffnung von der Gebläseeinheit verschlossen ist, so dass auf die montierte Gebläseeinheit von außerhalb des Gehäuses eine Kraft aufbringbar ist zum Bewegen der Gebläseeinheit.

Das Gehäuse der Kraftfahrzeugklimaanlage weist somit neben der Montageöffnung zusätzlich die Zusatzöffnung auf, welche beide erforderlich sind zur Montage und Demontage der Gebläseeinheit innerhalb des Gehäuses. Dabei ist die Zusatzöffnung von der Gebläseeinheit, insbesondere einem Motorhalter der Gebläseeinheit, in der Montagestellung bzw. in einem montierten Zustand der Gebläseeinheit verschlossen. Die Gebläseeinheit bildet damit einen Deckel bzw. Gebläsedeckel zum Verschließen der Zusatzöffnung in einem montierten Zustand der Gebläseeinheit.

In einer zusätzlichen Ausgestaltung weist die Gebläseeinheit eine Einrichtung zum Aufbringen einer Kraft auf die montierte Gebläseeinheit auf, z. B. einen Griff, einen Hebel oder eine Aussparung zum Einbringen eines Werkzeuges und/oder die Montageöffnung und die Zusatzöffnung ist an einer Querseite des Gehäuses ausgebildet. Die Gebläseeinheit, insbesondere eine Komponente der Gebläseeinheit, zum Beispiel der Motorhalter, ist somit auch im montierten Zustand teilweise außerhalb des Gehäuses angeordnet bzw. von außen zugänglich, sodass auch in einem montierten Zustand der Gebläseeinheit innerhalb des Gehäuses auf die Gebläseeinheit von außen eine Kraft aufbringbar ist zum Bewegen der Gebläseeinheit, sodass mittels einer Bewegung, insbesondere einer Rotationsbewegung, der Gebläseeinheit die Gebläseeinheit an dem Gehäuse montierbar und demontierbar ist.

In einer ergänzenden Ausgestaltung ist die Gebläseeinheit mit einer, vorzugsweise formschlüssigen, Verbindungseinrichtung, z. B. eine Bajonett-oder Schraubverbindung, lösbar mit dem Gehäuse verbunden. Aufgrund der Bewegbarkeit der Gebläseeinheit auch im montierten Zustand kann somit die Gebläseeinheit vom montierten Zustand in einer Montagestellung zur Demontage in eine Demontagestellung bewegt, insbesondere rotiert, werden, um die Verbindungseinrichtung zu lösen und bei einer Montage der Gebläseeinheit kann von außerhalb des Gehäuses die Gebläseeinheit durch eine Bewegung, insbesondere eine Rotationsbewegung, mit der Verbindungseinrichtung verbunden werden und dadurch die Gebläseeinheit an dem Gehäuse befestigt werden.

In einer zusätzlichen Variante ist die Zusatzöffnung der Montageöffnung in Querrichtung gegenüberliegend angeordnet. Die Zusatzöffnung und die Montageöffnung sind somit nicht an einer Vorderseite oder an einer Rückseite des Gehäuses der Kraftfahrzeugklimaanlage angeordnet, sondern an einer Querseite, das heißt seitlich an dem Gehäuse. Dabei bedeutet eine Querrichtung eine Querrichtung eines Kraftfahrzeuges, innerhalb dessen die Kraftfahrzeugklimaanlage angeordnet ist und eine Vorderseite in Richtung einer Vorderseite des Kraftfahrzeuges, und eine Rückseite in Richtung einer Rückseite des Kraftfahrzeuges, in dem die Kraftfahrzeugklimaanlage angeordnet ist.

Vorzugsweise ist die Montageöffnung an einer rechten Hälfte des Gehäuses und die Zusatzöffnung an einer linken Hälfte des Gehäuses ausgebildet oder umgekehrt.

In einer weiteren Ausführungsform umfasst das Gehäuse eine Gebläsekappe und die Zusatzöffnung ist an der Gebläsekappe ausgebildet. Die Gebläsekappe ist dabei vorzugsweise Bestandteil des Gehäuses.

In einer zusätzlichen Ausgestaltung ist die Gebläsekappe mit dem übrigen Gehäuse lösbar, z. B. mit einer Schraubverbindung, oder unlösbar, z. B. mit einer Schweißverbindung, fluiddicht verbunden. Die Gebläsekappe kann dabei auch einteilig mit dem übrigen Gehäuse ausgebildet sein, beispielsweise beim Spritzgießen des Gehäuses oder eines Teils des Gehäuses, zum Beispiel einer linken Hälfte des Gehäuses oder umgekehrt.

In einer ergänzenden Ausführungsform umfasst die Gebläseeinheit einen Motorhalter, vorzugsweise aus Kunststoff. Der Motorhalter ist vorzugsweise Bestandteil der Gebläseeinheit und an dem Motorhalter ist vorzugsweise der Elektromotor befestigt. Dabei dient der Motorhalter zusätzlich auch als Deckel zum Verschließen der Zusatzöffnung und an dem Motorhalter ist vorzugsweise auch die Einrichtung zum Aufbringen der Kraft, z. B. der Griff ausgebildet. Der Motorhalter ist dabei in einem montierten Zustand der Gebläseeinheit teilweise außerhalb des Gehäuses der Kraftfahrzeugklimaanlage angeordnet, sodass auch in einem montierten Zustand der Gebläseeinheit und einer fluiddichten, mittels des Motorhalters verschlossenen Zusatzöffnung, die Einrichtung von außen erreichbar ist.

In einer ergänzenden Variante ist an der Gebläseeinheit, insbesondere dem Motorhalter, und/oder an dem Gehäuse, insbesondere dem Motorhalter, eine Dichteinrichtung zur fluiddichten Abdichtung der Zusatzöffnung ausgebildet.

Insbesondere ist die Dichteinrichtung eine Nut-Feder-Verbindung und/oder eine Labyrinthdichtung und/oder eine Dichtlippe, z. B. aus SEBS oder Silikon, und/oder eine O-Ringdichtung, z. B. aus SEBS oder Silikon.

In einer zusätzlichen Ausgestaltung ist in das Gehäuse, insbesondere die Gebläsekappe, ein Kühlkanal zum Durchleiten von Luft zur Kühlung des Elektromotors integriert. Der Elektromotor ist mit dem Lüfterrad mittels einer Welle verbunden. Dabei wird zum Kühlen des Elektromotors in axialer Richtung der Welle Luft von dem Lüfterrad zu dem Elektromotor gefördert und anschließend durch den Kühlkanal wieder zurück in den Raum im Bereich des Lüfterrades oder umgekehrt.

Vorzugsweise weist das Lüfterrad Schaufeln auf zum Fördern der Luft.

In einer ergänzenden Ausgestaltung ist mittels einer Rotationsbewegung der Gebläseeinheit die Gebläseeinheit mittels der Verbindungseinrichtung an dem Gehäuse befestigbar und entfernbar. Mit der Einrichtung, insbesondere dem Griff, kann dabei von außerhalb des Gehäuses auf die Gebläseeinheit eine Kraft aufgebracht werden, sodass dadurch die Gebläseeinheit in eine Rotationsbewegung versetzt werden kann und dadurch die Gebläseeinheit mittels der Verbindungseinrichtung an dem Gehäuse, insbesondere der Gebläsekappe, befestigbar ist zum Montieren und entfernbar ist zur Demontage der Gebläseeinheit an dem Gehäuse der Kraftfahrzeugklimaanlage. Sofern die Gebläseeinheit von dem Gehäuse entfernbar ist, ist die Verbindung zwischen der Gebläseeinheit und dem Gehäuse mittels der Verbindungseinrichtung gelöst.

Zweckmäßig ist von einem Rastklips in einer Montagestellung eine Rotationsbewegung der montierten Gebläseeinheit blockiert und von dem Rastklips ist in einer Demontagestellung die Rotationsbewegung der montierten Gebläseeinheit freigegeben. Während des Betriebes der Kraftfahrzeugklimaanlage treten an dem Gehäuse Erschütterungen oder Vibrationen auf. Hierbei besteht die Gefahr, dass unbeabsichtigt die Verbindung zwischen der Gebläseeinheit und dem Gehäuse mittels der Verbindungseinrichtung gelöst werden kann. Das Rastklips verhindert eine Rotationsbewegung der Gebläseeinheit, sodass dadurch ein unbeabsichtigtes Lösen der Verbindung zwischen Gebläseeinheit und dem Gehäuse mittels der Verbindungseinrichtung, insbesondere der Bajonettverbindung, ausgeschlossen ist. Zur Demontage und der dadurch erforderlichen Rotationsbewegung der Gebläseeinheit ist das Rastklips von der Montagestellung in eine Demontagestellung zu bewegen, sodass dadurch von dem Rastklips die Rotationsbewegung der Gebläseeinheit nicht behindert ist und dadurch die Gebläseeinheit bewegt werden kann zum Lösen der Verbindung mittels der Verbindungseinrichtung zwischen der Gebläseeinheit und dem Gehäuse.

In einer ergänzenden Variante ist die Bajonettverbindung dahingehend ausgebildet, dass bei einer Montage der Gebläseeinheit an dem Gehäuse, insbesondere der Gebläsekappe, nur in einer Drehwinkelposition der Gebläseeinheit bezüglich des Gehäuses die Gebläseeinheit mit der Bajonettverbindung in Verbindung bringbar ist. Die Bajonettverbindung stellt damit eine Poka-Joke-Verbindung dar, sodass dadurch eine Fehlmontage der Gebläseeinheit an dem Gehäuse ausgeschlossen ist. Hierzu sind die Längen der Bajonettverbindungselemente an der Gebläseeinheit, insbesondere dem Motorhalter, und dem Gehäuse, insbesondere der Gebläsekappe, unterschiedlich lang ausgebildet, sodass sich dadurch diese Poka-Joke-Verbindung ergibt.

In einer weiteren Ausführungsform umfasst die Gebläseeinheit eine elektrische Steckverbindung und die Geometrie des Gehäuses und/oder der Gebläseeinheit ist dahingehend ausgebildet, dass eine elektrische Gegensteckverbindung mit der Steckverbindung nur in Eingriff bringbar ist, wenn die Verbindungseinrichtung sich in einem Montageendzustand befindet, insbesondere die Gebläseeinheit sich in der Montagestellung befindet. Beispielsweise ist dabei die Steckverbindung an der Gebläseeinheit nur im Montageendzustand, insbesondere in einer Montagestellung der Gebläseeinheit, nicht durch einen Abdeckring des Gehäuses, insbesondere an der Gebläsekappe, abgedeckt, sodass nur bei einer Drehwinkellage der Gebläseeinheit an der Gebläsekappe im Montagezustand ein Einbringen der Gegensteckverbindung in die Steckverbindung möglich ist.

In einer weiteren Ausgestaltung sind innerhalb des Gehäuses der Kraftfahrzeugklimaanlage der Kältemittelverdampfer und die Heizeinrichtung angeordnet.

In einer weiteren Ausgestaltung weist die Kraftfahrzeugklimaanlage einen Wärmeübertrager oder Wärmeaustauscher als Heizeinrichtung auf, welcher von einem Kühlmittel durchflossen wird zur Erwärmung der durch die Kraftfahrzeugklimaanlage geleiteten Luft und/oder die Heizeinrichtung ist eine elektrische Heizeinrichtung.

In einer weiteren Ausgestaltung weist die Kraftfahrzeugklimaanlage wenigstens einen Kanal zum Durchleiten von Luft auf.

In einer Variante sind der Kältemittelverdampfer und/oder die Heizeinrichtung innerhalb des wenigstens einen Kanales angeordnet.

In einer ergänzenden Ausgestaltung weist die Kraftfahrzeugklimaanlage wenigstens eine Luftleiteinrichtung, z. B. wenigstens eine Luftklappe und/oder wenigstens einen Schirm und/oder wenigstens ein Rollband, auf, mittels der oder denen die durch den wenigstens einen Kanal leitbare Luftmenge steuerbar ist.

Insbesondere besteht das Gehäuse der Kraftfahrzeugklimaanlage wenigstens teilweise aus Kunststoff.

In einer weiteren Variante ist das Gehäuse ein- oder mehrteilig, z. B. zwei oder dreiteilig.

Zweckmäßig ist der wenigstens eine Kanal zum Durchleiten von Luft von einer Wandung des Gehäuses begrenzt

Im Nachfolgenden wird ein Ausführungsbeispiel der Erfindung unter Bezugnahme auf die beigefügten Zeichnungen näher beschrieben. Es zeigt:
- Fig. 1: einen Querschnitt einer Kraftfahrzeugklimaanlage,
- Fig. 2: eine perspektivische Ansicht der Kraftfahrzeugklimaanlage,
- Fig. 3: eine Vorderansicht der Kraftfahrzeugklimaanlage gemäß Fig. 2 vor dem Entfernen eines Montagedeckels und einem Griff einer Gebläseeinheit in einer Montagestellung,
- Fig. 4: eine Vorderansicht der Kraftfahrzeugklimaanlage gemäß Fig. 2 nach dem Entfernen eines Montagedeckels und dem Griff der Gebläseeinheit in der Montagestellung,
- Fig. 5: eine Vorderansicht der Kraftfahrzeugklimaanlage gemäß Fig. 2 nach dem Entfernen eines Montagedeckels und dem Griff der Gebläseeinheit in einer Demontagestellung,
- Fig. 6: eine Vorderansicht der Kraftfahrzeugklimaanlage gemäß Fig. 2 nach dem Entfernen eines Montagedeckels und die Gebläseeinheit teilweise außerhalb eines Gehäuses,
- Fig. 7: eine Seitenansicht der Gebläseeinheit,
- Fig. 8: eine perspektivische Teilansicht des Gehäuses mit einer Gebläsekappe und
- Fig. 9: einen Längsschnitt der Gebläseeinheit im Montagezustand an der Gebläsekappe.

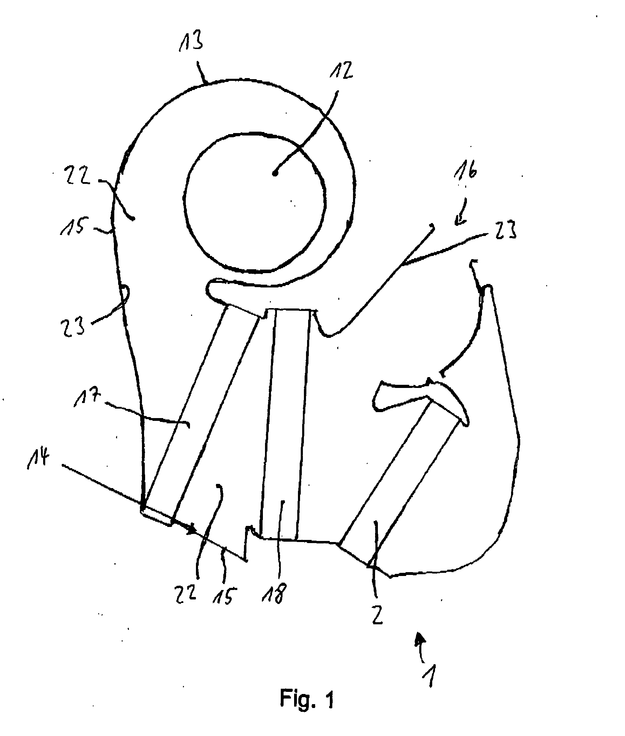

Fig. 1 zeigt eine Kraftfahrzeugklimaanlage 1. In einem ein- oder mehrteiligen Gehäuse 13 aus thermoplastischen Kunststoff mit einer Bodenwandung 14 und einer Luftaustrittsöffnung 16 ist eine Gebläseeinheit 12, ein Filter 17, ein Kältemittelverdampfer 18 und ein Wärmeübertrager als eine elektrische Heizeinrichtung 2 angeordnet. Das Gehäuse 13 bildet somit einen Kanal 22 zum Durchleiten der Luft. Gehäusewandungen 15 des Gehäuses 13 weisen an der Innenseite eine Oberfläche 23 auf, welche den Kanal 22 begrenzen. Die Luft für den Innenraum eines Kraftfahrzeuges wird mittels der Gebläseeinheit 12 durch den Filter 17, den Kältemittelverdampfer 18 sowie den Wärmeübertrager als elektrische Heizeinrichtung 2 geleitet. Der Kältemittelverdampfer 18 dient zum Kühlen der durch die Kraftfahrzeugklimaanlage 1 geleiteten Luft.

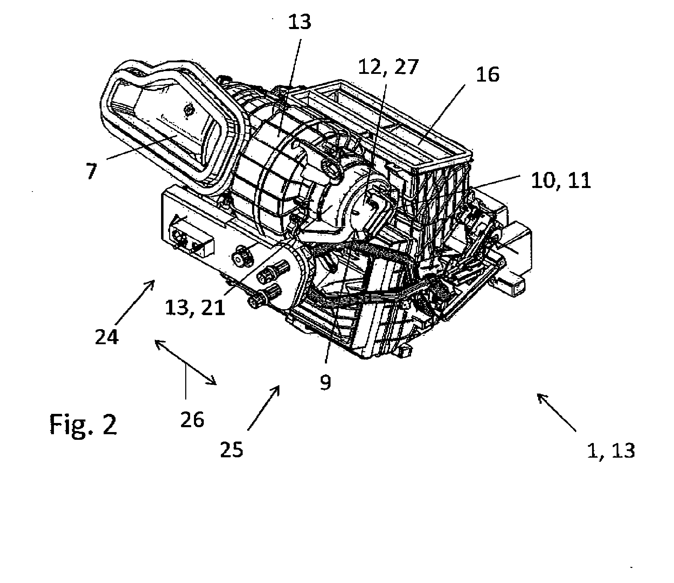

In Fig. 2 ist eine perspektivische Ansicht der Kraftfahrzeugklimaanlage 1 bzw. des Gehäuses 13 der Kraftfahrzeugklimaanlage 1 dargestellt. Das Gehäuse 13 der Kraftfahrzeugklimaanlage 1 weist neben der Luftaustrittsöffnung 16 auch eine Lufteintrittsöffnung 7 auf. Durch die Lufteintrittsöffnung 7 wird Luft aus der Umgebung des Kraftfahrzeuges und/oder aus einem Innenraum des Kraftfahrzeuges mittels der Gebläseeinheft 12 angesaugt und anschließend die gekühlte und/oder erwärmte Luft aus der Luftaustrittsöffnung 16 aus dem Gehäuse 13 der Kraftfahrzeugklimaanlage 1 ausgeleitet. Die aus der Luftaustrittsöffnung 16 ausgeleitete Luft wird dabei durch nicht dargestellte Luftkanäle sowie Luftdüsen dem Innenraum des Kraftfahrzeuges zugeführt.

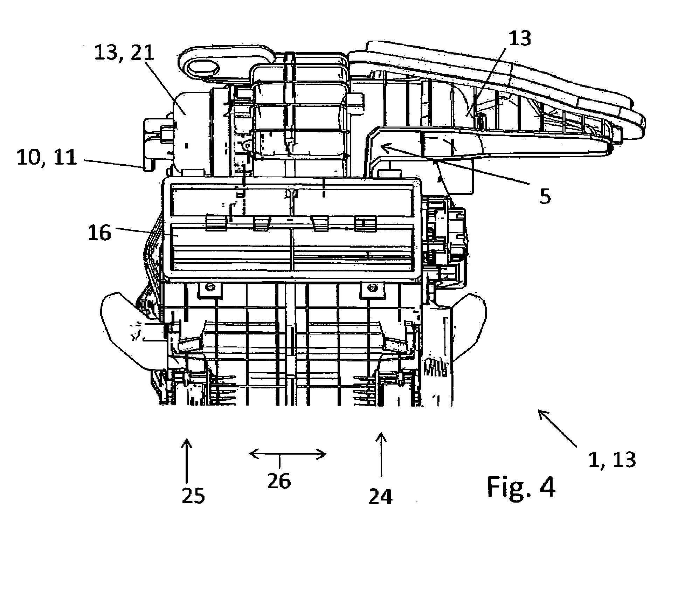

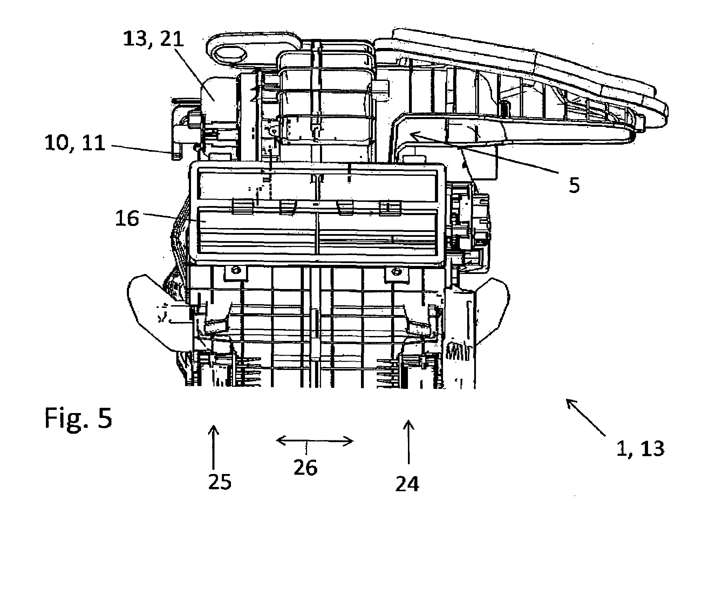

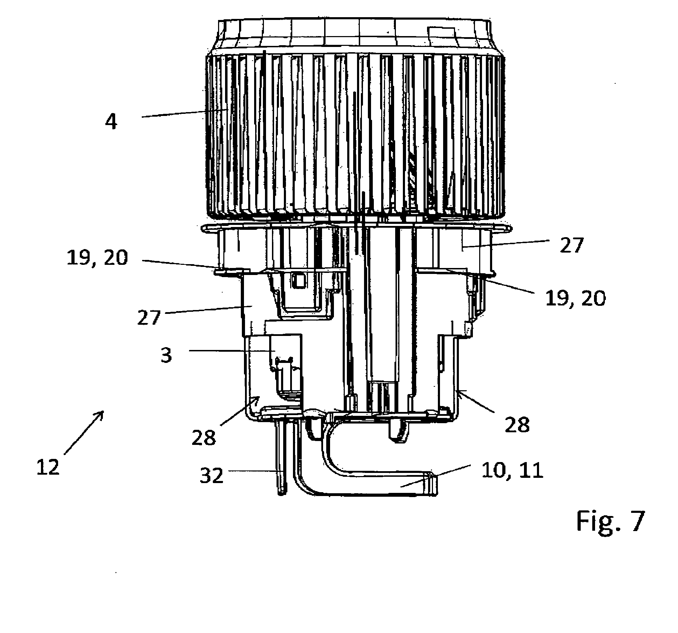

Die Gebläseeinheit 12 (Fig. 7) umfasst einen Elektromotor 3, ein Lüfterrad 4 mit Schaufeln zum Fördern der Luft durch den Kältemittelverdampfer 18 und die elektrische Heizeinrichtung 2 sowie einen Motorhalter 27 aus thermoplastischem Kunststoff. Am Motorhalter 27 ist ferner ein Griff 11 als Einrichtung 10 zur Aufbringung einer Kraft ausgebildet. Der Griff 10 ist dabei gemäß der Darstellung in Fig. 11 L-förmig ausgebildet, kann hierbei abweichend jedoch auch eine andere Geometrie, zum Beispiel U-förmig, ausgebildet sein (nicht dargestellt). Das Gehäuse 13 der Kraftfahrzeugklimaanlage 1 weist eine rechte Hälfte 24 und eine linke Hälfte 25 (Fig. 2) auf. Dabei ist in der perspektivischen Ansicht in Fig. 2 eine Vorderseite des Gehäuses 13 und eine Querseite des Gehäuses 13 sichtbar. An der in Fig. 2 sichtbaren Querseite weist das Gehäuse 13 eine Zusatzöffnung 9 auf. Ferner weist das Gehäuse 13 an der rechten Hälfte 24 eine Montageöffnung 5 (Fig. 4 und 5) auf. Die Montageöffnung 5 und die Zusatzöffnung 9 sind somit jeweils an einer Querseite des Gehäuses 13, jeweils an der rechten Hälfte 24 die Montageöffnung 5 und an der linken Hälfte 25 die Zusatzöffnung 9, ausgebildet. Die Montageöffnung 5 und die Zusatzöffnung 9 sind dabei gegenüberliegend bezüglich einer Querrichtung 26 an dem Gehäuse 13 vorhanden.

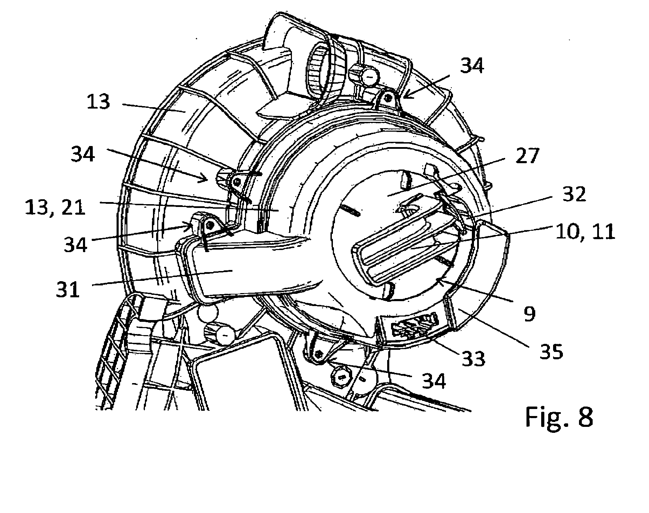

In Fig. 8 ist eine vergrößerte Teilansicht des Gehäuses 13 bzw. der Kraftfahrzeugklimaanlage 1 gemäß der Darstellung in Fig. 2 abgebildet. An dem übrigen Gehäuse 13 ist mittels mehrerer Schraubverbindungen 34 eine Gebläsekappe 21 aus Kunststoff als Bestandteil des Gehäuses 13 befestigt. Hierfür weist die Gebläsekappe 21 mehrere Ösen mit Bohrungen auf, und in die Öffnungen der Ösen sind Schrauben eingeführt, welche ein Außengewinde aufweisen und das Außengewinde der Schrauben greift in eine Bohrung mit einem Innengewinde an dem Gehäuse 13 ein (nicht dargestellt). Die Gebläsekappe 21 weist dabei die im Wesentlichen im Querschnitt kreisförmige Zusatzöffnung 9 auf, welche in dem in Fig. 8 dargestellten montierten Zustand der Gebläseeinheit 12 von dem Motorhalter 27 als Bestandteil der Gebläseeinheit 12 fluiddicht verschlossen ist. An dem Motorhalter 27 ist ferner auch der Griff 11 ausgebildet. Ferner weist die Gebläsekappe 21 einen Kühlkanal 31 auf. Mittels des Kühlkanals 31 kann Luft in axialer Richtung einer nicht dargestellten Welle zur Verbindung des Elektromotors 3 mit dem Lüfterrad 4 geleitet werden, sodass dadurch eine Luftkühlung des Elektromotors 3 möglich ist. Der Motorhalter 27 weist ferner drei Kühlungsöffnungen 28 auf, durch welche Luft zum Kühlen des Elektromotors 3 in den Kühlkanal 31 oder aus dem Kühlkanal 31 leitbar ist, wobei in Fig. 7 aufgrund der Ansicht nur zwei Kühlungsöffnungen 28 sichtbar sind.

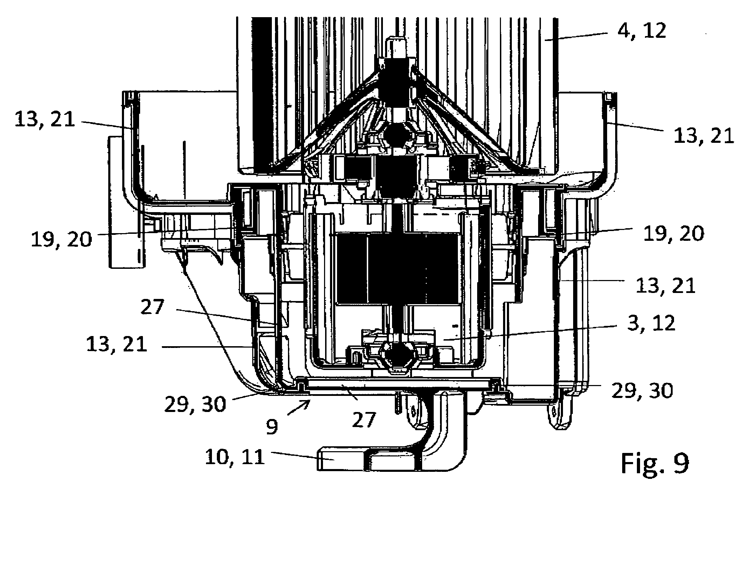

An dem Motorhalter 27 und an der Gebläsekappe 21 ist eine als Bajonettverbindung 20 ausgebildete Verbindungseinrichtung 19 vorhanden. Mit der Bajonettverbindung 20 kann die Gebläseeinheit 12 mechanisch lösbar an der Gebläsekappe 21 befestigt werden (Fig. 9). Zur Montage und Demontage der Gebläseeinheit 12 an der Gebläsekappe 21 bzw. dem Gehäuse 13 ist eine Rotationsbewegung der Gebläseeinheit 12 erforderlich, um entweder die Bajonettverbindung 20 in Eingriff zu bringen oder diese zu lösen. Dabei entspricht die Rotationsachse dieser Rotationsbewegung einer Achse der Welle (nicht dargestellt) zur Verbindung des Elektromotors 3 mit dem Lüfterrad 4.

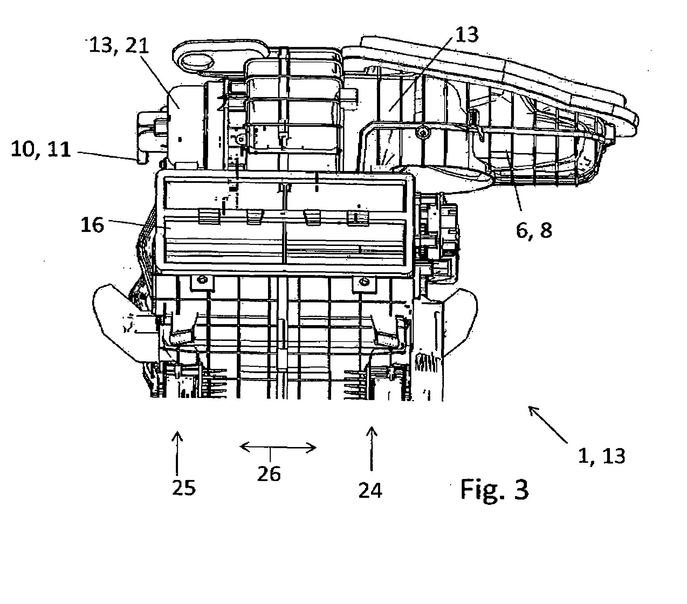

In Fig. 3 ist eine Montagestellung der Gebläseeinheit 12 an dem Gehäuse 13 angeordnet. In der in Fig. 3 dargestellten Montagestellung ist die Gebläseeinheit 12 mit der Bajonettverbindung 20 mechanisch mit der Gebläsekappe 21 verbunden und die Zusatzöffnung 9 ist von dem Motorhalter 27 verschlossen. Eine Montageöffnung 5 ist in Fig. 3 von einem Montagedeckel 6 verschlossen. Dabei stellt der Montagedeckel 6 einen Lufteintrittsdeckel 8 an der Lufteintrittsöffnung 7 dar. Mittels des Montagedeckels 6 und einer nicht dargestellten Dichtung ist die Montageöffnung 5 in dem in Fig. 3 dargestellten Zustand fluiddicht verschlossen. Zur Demontage, das heißt dem Entfernen der Gebläseeinheit 12 aus dem von dem Gehäuse 13 eingeschlossenen Innenraum, sind die nachfolgenden Montageschritte erforderlich.

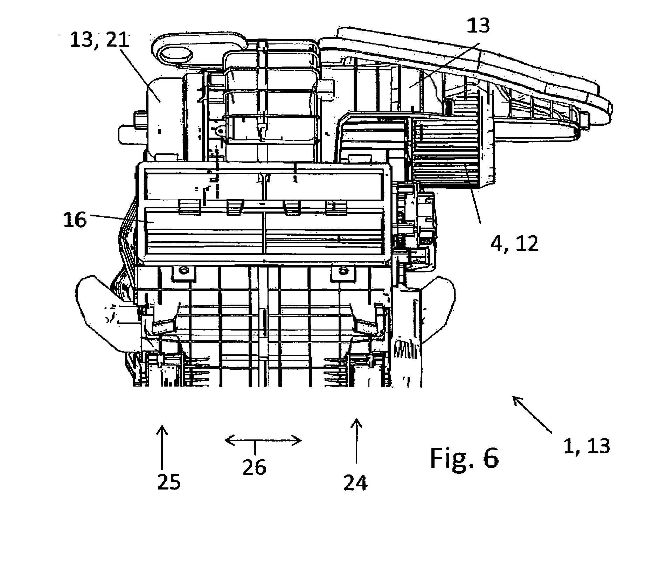

Zunächst ist der Montagedeckel 6 von dem Gehäuse 13 zu entfernen, sodass die Montageöffnung 5 (Fig. 4 und 5) an der rechten Hälfte 24 des Gehäuses 13 geöffnet ist (Fig. 4 und 5). Anschließend ist mittels des Griffes 11 auf die Gebläseeinheit 12 von außerhalb des Gehäuses 13 eine Kraft aufzubringen, sodass die Gebläseeinheit 13 eine Rotationsbewegung um die Achse der Welle zwischen dem Elektromotor 3 und dem Lüfterrad 4 ausführt, wobei der Drehwinkel der Rotationsbewegung beispielsweise im Bereich zwischen 5 und 40°, insbesondere zwischen 10 und 30°, liegt. Aufgrund dieser Rotationsbewegung der Gebläseeinheit 12 hat der Griff 11 eine andere Position, welches in Fig. 5 sichtbar ist im Vergleich zu der Position des Griffes 11 in Fig. 4. Nach dieser Dreh- bzw. Rotationsbewegung der Gebläseeinheit 12 ist die Bajonettverbindung 20 zwischen der Gebläseeinheit 12 und dem Gehäuse 13, das heißt der Gebläsekappe 21, gelöst und die Gebläseeinheit 12 kann durch die Montageöffnung 5 an der rechten Hälfte 24 des Gehäuses 13 aus dem von dem Gehäuse 13 eingeschlossenen Innenraum herausgenommen werden (Fig. 6). Eine Montage der Gebläseeinheit 12 innerhalb des Gehäuses 13 läuft entsprechend umgekehrt ab. Zur Montage bzw. Demontage der Gebläseeinheit 12 an der Kraftfahrzeugklimaanlage 1 ist somit wenig Arbeits- bzw. Bauraum erforderlich an der linken Hälfte 25 bzw. im Bereich des Griffes 11 erforderlich, weil hier lediglich auf den Griff 11 eine Kraft aufzubringen ist.

Im Montagezustand der Gebläseeinheit 12 an dem Gehäuse 13 ist die Zusatzöffnung 9 von dem Motorhalter 27 fluiddicht verschlossen. Hierzu weist der Motorhalter 27 und die Gebläsekappe 21 eine als Nut-Feder-Verbindung 30 ausgebildete Dichteinrichtung 29 auf (Fig. 9).

Der Motorhalter 27 ist ferner mit einem Rastklips 32 versehen. Der Rastklips 32 ist zwischen einer Montagestellung und einer Demontagestellung bewegbar. In der Montagestellung des Rastklips 32 ist eine Rotationsbewegung der Gebläseeinheit 12 relativ zu dem Gehäuse 13 blockiert und in der Demontagestellung des Rastklips 32 ist die Rotationsbewegung der Gebläseeinheit 13 freigegeben. Vor einem Bewegen der Gebläseeinheit 12 von einer Montagestellung gemäß Fig. 3 und 4 in eine Demontagestellung gemäß Fig. 5 ist es somit erforderlich, zunächst den Rastklips 32 von der Montagestellung in die Demontagestellung zu bewegen. Dadurch kann in der Montagestellung gemäß Fig. 3 ein unbeabsichtigtes Lösen der mechanischen Bajonettverbindung 20 zwischen der Gebläseeinheit 12 und dem Gehäuse 13 verhindert werden, beispielsweise aufgrund von Vibrationen oder Erschütterungen. Umgekehrt ist bei einer Montage der Gebläseeinheit 12 an dem Gehäuse 13 nach dem Verbinden der Bajonettverbindung 20 der Rastklips 32 von der Demontagestellung in die Montagestellung zu bewegen.

Zur Versorgung des Elektromotors 3 mit elektrischer Energie ist an dem Motorhalter 27 eine elektrische Steckverbindung 33 (Fig. 8) mit wenigstens zwei nicht dargestellten elektrischen Kontaktelementen angeordnet. In die elektrische Steckverbindung 33 kann eine nicht dargestellte elektrische Gegensteckverbindung mit wenigstens zwei elektrischen Kontaktelementen eingebracht werden, sodass dadurch der Elektromotor 3 mit elektrischem Strom versorgt werden kann. In der Darstellung in Fig. 8 befindet sich die Gebläseeinheit 12 in der Montagestellung. Dadurch ist die elektrische Steckverbindung 33 von einem Abdeckring 35 freigegeben und die Gegensteckverbindung kann in die Steckverbindung 33 eingefügt werden. Beim Bewegen der Gebläseeinheit 12 von der Montagestellung in die Demontagestellung ist die Gebläseeinheit 12 entgegen dem Uhrzeigersinn (Fig. 8) zu bewegen, sodass dadurch in einer Demontagestellung die Steckverbindung 33 teilweise von dem Abdeckring 35 an der Gebläsekappe 21 abgedeckt ist. Dadurch kann die Gegensteckverbindung nur dann mit der Steckverbindung 33 in Eingriff gebracht werden, wenn sich die Gebläseeinheit 12 vollständig aufgrund einer entsprechenden Rotationsbewegung in der Montagestellung befindet. Dadurch kann eine Fehlmontage der Gebläseeinheit 12 bei einer nur teilweise bestehenden oder nicht bestehenden Bajonettverbindung 20 zwischen der Gebläseeinheit 12 und dem Gehäuse 13 vermieden werden. Ferner ist der Rastclips 32 vorzugsweise dahingehend ausgebildet, dass nach dem Erreichen der Montagestellung der Gebläseeinheit 12 der Rastklips 32 selbsttätig von der Demontagestellung in die Montagestellung sich bewegt und dadurch ein unbeabsichtigtes Lösen der Bajonettverbindung 20 verhindert ist. Lediglich zum Bewegen des Rastklips 32 von der Montagestellung in die Demontagestellung ist auf den Rastklips 32 eine Kraft aufzubringen.

Insgesamt betrachtet sind mit der erfindungsgemäßen Kraftfahrzeugkilmaanlage 1 wesentliche Vorteile verbunden. Die Gebläseeinheit 12 ist an dem Gehäuse 13 bei der Herstellung der Kraftfahrzeugklimaanlage 1 zu montieren und im Servicefall, beispielsweise bei einem Schaden an dem Elektromotor 3, ist eine Demontage der Gebläseeinheit 12 aus dem Gehäuse 13 erforderlich, wobei die Kraftfahrzeugklimaanlage 1 bereits in einem Kraftfahrzeug eingebaut ist. Hierbei ist in vorteilhafter Weise an der linken Hälfte 25 des Gehäuses 13 nur sehr wenig Arbeits- bzw. Bauraum zur Montage und Demontage der Gebläseeinheit 12 erforderlich, weil lediglich auf dem Griff 11 von außerhalb des Gehäuses eine Kraft aufzubringen ist.

### Bezugszeichenliste

- 1: Kraftfahrzeugklimaanlage
- 2: Elektrische Heizeinrichtung
- 3: Elektromotor
- 4: Lüfterrad
- 5: Montageöffnung
- 6: Montagedeckel
- 7: Lufteintrittsöffnung
- 8: Lufteintrittsdeckel
- 9: Zusatzöffnung
- 10: Einrichtung zur Aufbringung einer Kraft
- 11: Griff
- 12: Gebläseeinheit
- 13: Gehäuse
- 14: Bodenwandung
- 15: Gehäusewandung
- 16: Luftaustrittsöffnung
- 17: Filter
- 18: Kältemittelverdampfer
- 19: Verbindungseinrichtung
- 20: Bajonettverbindung
- 21: Gebläsekappe
- 22: Kanal
- 23: Oberfläche
- 24: Rechte Hälfte des Gehäuses
- 25: Linke Hälfte des Gehäuses
- 26: Querrichtung
- 27: Motorhalter
- 28: Kühlungsöffnung in Motorhalter
- 29: Dichteinrichtung
- 30: Nut-Feder-Verbindung
- 31: Kühlkanal
- 32: Rastclips
- 33: Elektrische Steckverbindung
- 34: Schraubverbindung
- 35: Abdeckring

## Patentansprüche

1. Kraftfahrzeugklimaanlage (1), umfassend
- ein Gehäuse (13),
- eine innerhalb des Gehäuses (13) angeordnete Gebläseeinheit (12) mit einem Elektromotor (3) und einem Lüfterrad (4),
- eine Montageöffnung (5) an dem Gehäuse (13) zur Montage und Demontage der Gebläseeinheit (12),
- einen Montagedeckel (6) zum Verschließen der Montageöffnung (5),
- vorzugsweise einen Kältemittelverdampfer (18) zum Kühlen einer einem Fahrzeuginnenraum zuzuführenden Luft,
- vorzugsweise eine Heizeinrichtung (2) zum Erwärmen der dem Fahrzeuginnenraum zuzuführenden Luft,
**dadurch gekennzeichnet, dass**
das Gehäuse (13) mit einer Zusatzöffnung (9) versehen ist und bei einer montierten Gebläseeinheit (12) die Zusatzöffnung (9) von der Gebläseeinheit (12) verschlossen ist, so dass auf die montierte Gebläseeinheit (12) von außerhalb des Gehäuses (13) eine Kraft aufbringbar ist zum Bewegen der Gebläseeinheit (12).

2. Kraftfahrzeugklimaanlage nach Anspruch 1, **dadurch gekennzeichnet, dass** die Gebläseeinheit (12) eine Einrichtung (10) zum Aufbringen einer Kraft auf die montierte Gebläseeinheit (12) aufweist, z. B. einen Griff (11), einen Hebel oder eine Aussparung zum Einbringen eines Werkzeuges und/oder die Montageöffnung (5) und die Zusatzöffnung (9) an einer Querseite des Gehäuses ausgebildet ist.

3. Kraftfahrzeugklimaanlage nach Anspruch 1 oder 2, **dadurch gekennzeichnet, dass** die Gebläseinheit (12) mit einer, vorzugsweise formschlüssigen, Verbindungseinrichtung (19), z. B. eine Bajonett- oder Schraubverbindung (20), lösbar mit dem Gehäuse (13) verbunden ist.

4. Kraftfahrzeugklimaanlage nach einem oder mehreren der vorhergehenden Ansprüche, dadurch gekennzeichet, dass die Zusatzöffnung (9) der Montageöffnung (5) in Querrichtung (26) gegenüberliegend angeordnet ist.

5. Kraftfahrzeugklimaanlage nach einem oder mehreren der vorhergehenden Ansprüche, **dadurch gekennzeichnet, dass** die Montageöffnung (5) an einer rechten Hälfte (24) des Gehäuses (13) und die Zusatzöffnung (9) an einer linken Hälfte (25) des Gehäuses (13) ausgebildet ist oder umgekehrt.

6. Kraftfahrzeugklimaanlage nach einem oder mehreren der vorhergehenden Ansprüche, **dadurch gekennzeichnet, dass** das Gehäuse (13) eine Gebläsekappe (21) umfasst und die Zusatzöffnung (9) an der Gebläsekappe (21) ausgebildet ist.

7. Kraftfahrzeugklimaanlage nach Anspruch 6, **dadurch gekennzeichnet, dass** die Gebläsekappe (21) mit dem übrigen Gehäuse (13) lösbar, z. B. mit einer Schraubverbindung (34), oder unlösbar, z. B. mit einer Schweißverbindung, fluiddicht verbunden ist.

8. Kraftfahrzeugklimaanlage nach einem oder mehreren der vorhergehenden Ansprüchen, dadurch gekertnzeichnet, dass die Gebläseeinheit (12) einen Motorhalter (27), vorzugsweise aus Kunststoff, umfasst.

9. Kraftfahrzeugklimaanlage nach einem oder mehreren der vorhergehenden Ansprüche, **dadurch gekennzeichnet, dass** an der Gebläseeinheit (12), insbesondere dem Motorhalter (27), und/oder an dem Gehäuse (13), insbesondere dem Motorhalter (27), eine Dichteinrichtung (29) zur fluiddichten Abdichtung der Zusatzöffnung (9) ausgebildet ist.

10. Kraftfahrzeugklimaanlage nach Anspruch 9, **dadurch gekennzeichnet, dass** die Dichteinrichtung (29) eine Nut-Feder-Verbindung (30) und/oder eine Labyrinthdichtung und/oder eine Dichtlippe, z. B. aus SEBS oder Silikon, und/oder eine O-Ringdichtung, z. B. aus SEBS oder Silikon, ist.

11. Kraftfahrzeugklimaanlage nach einem oder mehreren der vorhergehenden Ansprüche, **dadurch gekennzeichnet, dass** in das Gehäuse (13), insbesondere die Gebläsekappe (21), ein Kühlkanal (31) zum Durchleiten von Luft zur Kühlung des Elektromotors (3) integriert ist.

12. Kraftfahraeugklimaanlage nach einem oder mehreren der Ansprüche 3 bis 11, **dadurch gekennzeichnet, dass** mittels einer Rotationsbewegung der Gebläseeinheit (12) die Gebläseeinheit (12) mittels der Verbindungseinrichtung (19) an dem Gehäuse (13) befestigbar und entfernbar.

13. Kraftfahrzeugklimaanlage nach Anspruch 12, **dadurch gekennzeichnet, dass** von einem Rastklips (32) in einer Montagestellung eine Rotationsbewegung der montierten Gebläseeinheit (12) blockiert ist und von dem Rastklips (32) in einer Demontagestellung die Rotationsbewegung der montierten Gebläseeinheit (12) freigegeben ist.

14. Kraftfahrzeugklimaanlage nach einem oder mehreren der Ansprüche 3 bis 13, **dadurch gekennzeichnet, dass** die Bajonettverbindung (20) dahingehend ausgebildet ist, dass bei einer Montage der Gebläseeinheit (12) an dem Gehäuse (13), insbesondere der Gebläsekappe (21), nur in einer Drehwinkelposition der Gebläseeinheit (12) bezüglich des Gehäuses (13) die Gebläseeinheit (12) mit der Bajonettverbindung (20) in Verbindung bringbar ist.

15. Kraftfahrzeugklimaanlage nach einem oder mehreren der vorhergehenden Ansprüche, **dadurch gekennzeichnet, dass** die Gebläseeinheit (12) eine elektrische Steckverbindung (33) umfasst und die Geometrie des Gehäuses (13, 35) und/oder der Gebläseeinheit (12) dahingehend ausgebildet ist, dass eine elektrischer Gegensteckverbindung mit der Steckverbindung (33) nur in Eingriff bringbar ist, wenn die Verbindungseinrichtung (19) sich in einem Montageendzustand befindet, insbesondere die Gebläseeinheit (12) sich in einer Montagestellung befindet.

## Claims

1. A motor vehicle air-conditioning system (1), comprising
- a housing (13),
- a fan unit (12) arranged inside the housing (13) and comprising an electric motor (3) and a fan wheel (4),
- an assembly opening (5) on the housing (13) for assembly and disassembly of the fan unit (12),
- an assembly cover (6) for closing the assembly opening (5),
- preferably a coolant evaporator (18) for cooling an air to be fed to a vehicle interior,
- preferably a heating device (2) for heating the air to be fed to the vehicle interior,
**characterised in that** the housing (13) is provided with an additional opening (9) and, when a fan unit (12) is assembled, the additional opening (9) is closed by the fan unit (12) so that a force can be applied to the assembled fan unit (12) from outside the housing (13) in order to move the fan unit (12).

2. The motor vehicle air-conditioning system according to claim 1, **characterised in that** the fan unit (12) has a device (10) for applying a force to the assembled fan unit (12), for example a grip (11), a lever or a recess for introducing a tool, and/or the assembly opening (5) and the additional opening (9) is formed on a transverse side of the housing.

3. The motor vehicle air-conditioning system according to claim 1 or 2, **characterised in that** the fan unit (12) is connected to the housing (13) separably by means of a connection device (19), preferably an interlocking connection device, for example a bayonet connection or screw connection (20).

4. The motor vehicle air-conditioning system according to one or more of the preceding claims, **characterised in that** the additional opening (9) is arranged opposite the assembly opening (5) in the transverse direction (26).

5. The motor vehicle air-conditioning system according to one or more of the preceding claims, **characterised in that** the assembly opening (5) is formed on a right-hand half (24) of the housing (13) and the additional opening (9) is formed on a left-hand half (25) of the housing (13) or vice versa.

6. The motor vehicle air-conditioning system according to one or more of the preceding claims, **characterised in that** the housing (13) comprises a fan cap (21) and the additional opening (9) is formed on the fan cap (21).

7. The motor vehicle air-conditioning system according to Claim 6, **characterised in that** the fan cap (21) is connected in a fluid-tight manner to the rest of the housing (13) separably, for example by means of a screw connection (34), or inseparably, for example by means of a welded connection.

8. The motor vehicle air-conditioning system according to one or more of the preceding claims, **characterised in that** the fan unit (12) comprises a motor holder (27), preferably made of plastic.

9. The motor vehicle air-conditioning system according to one or more of the preceding claims, **characterised in that** a seal device (29) for fluid-tight sealing of the additional opening (9) is formed on the fan unit (12), in particular the motor holder (27), and/or on the housing (13), in particular the motor holder (27).

10. The motor vehicle air-conditioning system according to claim 9, **characterised in that** the seal device (29) is a spring/groove connection (30) and/or a labyrinth seal and/or a sealing lip, for example made of SEBS or silicone, and/or is an O-ring seal, for example made of SEBS or silicone.

11. The motor vehicle air-conditioning system according to one or more of the preceding claims, **characterised in that** a cooling duct (31) for conducting air in order to cool the electric motor (3) is integrated into the housing (13), in particular the fan cap (21).

12. The motor vehicle air-conditioning system according to one or more of claims 3 to 11, **characterised in that** the fan unit (12) can be fastened to and removed from the housing (13) by means of the connection device (19) by means of a rotational movement of the fan unit (12).

13. The motor vehicle air-conditioning system according to claim 12, **characterised in that** a rotational movement of the assembled fan unit (12) is blocked by a locking clip (32) in an assembled position and the rotational movement of the assembled fan unit (12) is released by the locking clip (32) in a disassembled position.

14. The motor vehicle air-conditioning system according to one or more of claims 3 to 13, **characterised in that** the bayonet connection (20) is designed in such a way that, when the fan unit (12) is assembled on the housing (13), in particular the fan cap (21), the fan unit (12) can be brought into connection with the bayonet connection (20) only in one angular position of the fan unit (12) with respect to the housing (13).

15. The motor vehicle air-conditioning system according to one or more of the preceding claims, **characterised in that** the fan unit (12) comprises an electrical plug connection (33) and the geometry of the housing (13, 35) and/or of the fan unit (12) is designed in such a way that an electrical mating plug connection can only be brought into engagement with the plug connection (33) when the connection device (19) is located in a final assembled state, in particular when the fan unit (12) is located in an assembled position.

## Revendications

1. Système de climatisation (1) d'un véhicule automobile, comprenant
- un carter (13),
- un ensemble formant pulseur (12) disposé à l'intérieur du carter (13) et comprenant un moteur électrique (3) et une roue de ventilateur (4),
- une ouverture de montage (5) située sur le carter (13) et servant au montage et au démontage de l'ensemble formant pulseur (12),
- un couvercle de montage (6) servant à fermer l'ouverture de montage (5),
- de préférence, un évaporateur de fluide frigorigène (18) servant au refroidissement d'un air à fournir à l'habitacle d'un véhicule,
- de préférence, un dispositif de chauffage (2) servant à chauffer l'air à fournir à l'habitacle du véhicule,
**caractérisé en ce que**
le carter (13) est doté d'une ouverture supplémentaire (9) et, quand un ensemble formant pulseur (12) est monté, l'ouverture supplémentaire (9) est fermée par l'ensemble formant pulseur (12), de sorte qu'une force servant à déplacer l'ensemble formant pulseur (12) peut être appliquée, de l'extérieur du carter (13), à l'ensemble formant pulseur (12) qui est monté.

2. Système de climatisation d'un véhicule automobile selon la revendication 1, **caractérisé en ce que** l'ensemble formant pulseur (12) présente un dispositif (10) servant à appliquer une force à l'ensemble formant pulseur (12) qui est monté, ce dispositif étant par exemple une poignée (11), un levier ou un évidement pour y introduire un outil et/ou l'ouverture de montage (5), et l'ouverture supplémentaire (9) est configurée sur un côté transversal du carter.

3. Système de climatisation d'un véhicule automobile selon la revendication 1 ou 2, **caractérisé en ce que** l'ensemble formant pulseur (12) est assemblé avec le carter (13), de façon amovible, en utilisant un dispositif d'assemblage (19) de préférence réalisé par complémentarité de forme, par exemple un assemblage à baïonnette ou un assemblage à vis (20).

4. Système de climatisation d'un véhicule automobile selon l'une quelconque ou plusieurs des revendications précédentes, **caractérisé en ce que** l'ouverture supplémentaire (9) est disposée en faisant face à l'ouverture de montage (5) suivant une direction transversale (26).

5. Système de climatisation d'un véhicule automobile selon l'une quelconque ou plusieurs des revendications précédentes, **caractérisé en ce que** l'ouverture de montage (5) est configurée sur une moitié droite (24) du carter (13), l'ouverture supplémentaire (9) étant disposée sur une moitié gauche (25) du carter (13) ou inversement.

6. Système de climatisation d'un véhicule automobile selon l'une quelconque ou plusieurs des revendications précédentes, **caractérisé en ce que** le carter (13) comprend un chapeau de pulseur (21), et l'ouverture supplémentaire (9) est configurée sur le chapeau de pulseur (21).

7. Système de climatisation d'un véhicule automobile selon la revendication 6, **caractérisé en ce que** le chapeau de pulseur (21) est assemblé, en étant étanche aux fluides, avec la partie restante du carter (13), de façon amovible par exemple en utilisant un assemblage à vis (34), ou bien de façon inamovible par exemple en utilisant un assemblage soudé.

8. Système de climatisation d'un véhicule automobile selon l'une quelconque ou plusieurs des revendications précédentes, **caractérisé en ce que** l'ensemble formant pulseur (12) comprend un support de moteur (27), de préférence en matière plastique.

9. Système de climatisation d'un véhicule automobile selon l'une quelconque ou plusieurs des revendications précédentes, **caractérisé en ce qu'**un dispositif d'étanchéité (29) servant à assurer l'étanchéité de l'ouverture supplémentaire (9), par rapport aux fluides, est configuré sur l'ensemble formant pulseur (12), en particulier sur le support de moteur (27), et/ou sur le carter (13), en particulier sur le support de moteur (27).

10. Système de climatisation d'un véhicule automobile selon la revendication 9, **caractérisé en ce que** le dispositif d'étanchéité (29) est un assemblage (30) par emboîtement mâle/femelle et/ou un joint à labyrinthe et/ou une lèvre d'étanchéité, par exemple se composant d'un élastomère de type SEBS ou de silicone, et/ou est un joint annulaire torique, par exemple se composant d'un élastomère de type SEBS ou de silicone.

11. Système de climatisation d'un véhicule automobile selon l'une quelconque ou plusieurs des revendications précédentes, **caractérisé en ce qu'**un conduit de refroidissement (31) servant à la circulation d'air pour le refroidissement du moteur électrique (3) est intégré dans le carter (13), en particulier dans le chapeau de pulseur (21).

12. Système de climatisation d'un véhicule automobile selon l'une quelconque ou plusieurs des revendications 3 à 11, **caractérisé en ce que** l'ensemble formant pulseur (12) peut être fixé sur le carter (13), et démonté, au moyen du dispositif d'assemblage (19), par un mouvement de rotation de l'ensemble formant pulseur (12).

13. Système de climatisation d'un véhicule automobile selon la revendication 12, **caractérisé en ce que**, dans une position de montage, un mouvement de rotation de l'ensemble formant pulseur (12), qui est monté, est bloqué par un clips d'encliquetage (32) et, dans une position de démontage, le mouvement de rotation de l'ensemble formant pulseur (12) qui est monté, est libéré par le clips d'encliquetage (32).

14. Système de climatisation d'un véhicule automobile selon l'une quelconque ou plusieurs des revendications 3 à 13, **caractérisé en ce que** l'assemblage à baïonnette (20) est conçu en ce sens, que lors d'un montage de l'ensemble formant pulseur (12), sur le carter (13), en particulier lors d'un montage du chapeau de pulseur (21), l'ensemble formant pulseur (12) peut être placé pour se combiner avec l'assemblage à baïonnette (20), seulement dans une position d'angle de rotation de l'ensemble formant pulseur (12), par rapport au carter (13).

15. Système de climatisation d'un véhicule automobile selon l'une quelconque ou plusieurs des revendications précédentes, **caractérisé en ce que** l'ensemble formant pulseur (12) comprend un connecteur électrique (33), et la géométrie du carter (13, 35) et/ou de l'ensemble formant pulseur (12) est conçue en ce sens, qu'une mise en contact électrique avec le connecteur (33) peut être réalisée seulement quand le dispositif d'assemblage (19) se trouve dans un état terminal de montage, en particulier quand l'ensemble formant pulseur (12) se trouve dans une position de montage.
